# EUROPÄISCHE PATENTSCHRIFT

(11) **EP 2 778 657 B1**
(45) Veröffentlichungstag und Bekanntmachung des Hinweises auf die Patenterteilung: **12.12.2018**
(21) Anmeldenummer: 13159570.4
(22) Anmeldetag: 15.03.2013
(51) Int. Cl.: G01M 3/20, G01N 21/35, G01N 27/407, H01B 7/32, G01N 21/59, G01N 21/3504

(54) **Detektionsvorrichtung zur Detektion von zumindest einem Störzustand**
Detection device for detecting at least one fault condition
Dispositif de détection d'au moins un état de dérangement

(43) Veröffentlichungstag der Anmeldung: 17.09.2014
(73) Patentinhaber: Airbus Defence and Space GmbH, 82024 Taufkirchen (DE)
(72) Erfinder: Kübler, Ulrich, 88677 Markdorf (DE); Kern, Peter, 88682 Salem (DE); Hummel, Thomas, 88682 Salem (DE)
(74) Vertreter: Daub, Thomas

(56) Entgegenhaltungen:
- CA-A1- 2 847 616
- DE-A1-102009 047 745
- US-A- 4 179 926
- US-A- 4 725 551
- US-A- 5 362 568
- US-A1- 2009 200 160

## Beschreibung

### Stand der Technik

Die Erfindung betrifft eine Detektionsvorrichtung zur Detektion von zumindest einem Störzustand mit zumindest einer Tracereinheit, die in zumindest einem Betriebszustand zumindest eine speziell zugesetzte Tracersubstanz aufweist, und mit zumindest einer Detektoreinheit zu einer Detektion einer in zumindest einem Störzustand freigesetzten Stoffportion der zumindest einen Tracersubstanz. Detektorvorrichtungen nach dem Stand der Technik, die zur Detektion eines Störzustands, beispielsweise zur Detektion von Kabelbränden oder von einem Überdruck innerhalb eines Geräts und/oder eines Bauteils, vorgesehen sind, basierend auf dem Prinzip einer Detektion von den durch den Störzustand erzeugten Produkten, beispielsweise durch eine verschmorte Kabelisolierung freiwerdende Moleküle eines Kunststoffs der Kabelisolierung. Im Fall eines Überdrucks wird eine Tracersubstanz durch eine Beschädigung einer mechanischen Umhüllung oder einer Einbettung freigesetzt. Der Störzustand kann somit erst bei seinem Eintritt festgestellt werden.
Aus der US 5 362 568 A ist bereits eine Detektorvorrichtung zur Detektion und Lokalisierung einer Überhitzung mittels Perfluorcarbontracern, welche bei normalen Betriebstemperaturen auf einem Träger angebracht sind, bekannt. Ferner ist in der US 4 179 926 A bereits eine Detektorvorrichtung zur Detektion und Lokalisierung einer Temperaturerhöhung mittels verschiedener Tracer, welche sich bei unterschiedlichen Mindesttemperaturen von einem Träger lösen, vorgeschlagen worden.

Des Weiteren ist aus der US 4 725 551 A bereits eine Detektionsvorrichtung zur Detektion und Lokalisierung von Lecks in Flüssigkeitsspeichertanks mittels eines der gespeicherten Flüssigkeit zugesetzten Tracers bekannt.

Zudem ist in der CA 2 847 616 A1 bereits eine Detektionsvorrichtung mit Kapseln, welche Markersubstanzen verschiedener Ionen-Mobilitäten enhalten und welche gegenüber Druck, Hitze, Wetter, Licht oder chemischen Bedingungen einen definierten Widerstand aufweisen, und mit lonen-Mobilitäts-Sensoren, welche dazu vorgesehen sind, aus den Kapseln ausgetretene Markersubstanzen zu detektieren, vorgeschlagen worden.

Darüber hinaus ist aus der US 2009/200160 A1 bereits eine Detektionsvorrichtung bekannt, wobei eine in einem versiegelten Behälter befindliche Geruchssubstanz bei einem Überschreiten einer vorbestimmten Temperatur aus einer Behälteröffnung tritt und von einer Schicht aufgefangen wird.

Das Ziel der Erfindung besteht insbesondere darin, eine Detektionsvorrichtung zur Verfügung zu stellen, die eine Detektion zumindest eines Störzustands erlaubt und es vorzugsweise erlaubt, den zumindest einen Störzustand vor einem Auftreten einer durch den Störzustand verursachten weitergehenden Beschädigung oder Gefahr zu detektieren.

### Vorteile der Erfindung

Die Erfindung geht aus von einer Detektionsvorrichtung zur Detektion von zumindest einem Störzustand mit zumindest einer Tracereinheit, die in zumindest einem Betriebszustand zumindest eine speziell zugesetzte Tracersubstanz aufweist, und mit zumindest einer Detektoreinheit zu einer Detektion einer in zumindest einem Störzustand freigesetzten Stoffportion der zumindest einen Tracersubstanz.

Erfindungsgemäß weist die Detektoreinheit eine Vielzahl von Detektorelementen auf, die zu einer Detektion der unterschiedlichen Tracersubstanzen vorgesehen sind, wobei die Detektorelemente Metall-Oxid-Sensoren umfassen, die die eine Tracersubstanz mit einem Verfahren, bei dem ein Leitwert eines Metall-Oxid-Sensors durch die zumindest eine Tracersubstanz verändert wird, detektiert.

Unter einem "Störzustand" soll insbesondere ein von einem sicheren Betriebszustand abweichender Zustand verstanden werden, wobei in dem Störzustand insbesondere Bedingungen herrschen, die zumindest im Wesentlichen von den in dem sicheren Betriebszustand auftretenden Bedingungen abweichen, beispielsweise ein Zustand mit einer starken Erhöhung einer Temperatur, insbesondere stromleitender Bauteile, beispielsweise einem Kabel oder einem Kabelbaum, oder mit einer Druckerhöhung in einem Gefäß und/oder einer Leitung, oder mit einem Atmosphärenverlust, insbesondere unter Bedingungen reduzierter Schwerkraft, beispielsweise im Weltraum. Vorzugsweise ist der zumindest eine Störzustand, der detektiert werden soll, derart ausgewählt, dass ein Eintreten des zumindest einen Störzustands einem Auftreten eines Zustands, der eine Gefährdung von Personen bewirkt, vorausgeht, und dass insbesondere bei Eintreten des zumindest einen Störzustands eine Gefährdung von Personen noch ausgeschlossen werden kann.

Unter einer "Tracereinheit" soll insbesondere eine Einheit verstanden werden, die in zumindest einem Betriebszustand zumindest eine speziell zugesetzte Tracersubstanz aufweist, die insbesondere zu einer Freisetzung in zumindest einem Betriebszustand vorgesehen ist, wobei insbesondere eine in dem zumindest einen Störzustand pro Zeiteinheit freigesetzte Stoffmenge der zumindest einen Tracersubstanz zumindest um zehn Prozent, vorteilhaft zumindest um fünfzig Prozent und vorzugsweise zumindest um einhundert Prozent höher oder zumindest um zehn Prozent, vorteilhaft zumindest um fünfzig Prozent und vorzugsweise zumindest um einhundert Prozent geringer ist als eine in dem sicheren Betriebszustand pro Zeiteinheit freigesetzte Menge der zumindest einen Tracersubstanz. Darunter, dass die zumindest eine Tracersubstanz "zu einer Freisetzung in zumindest einem Betriebszustand vorgesehen ist", soll insbesondere verstanden werden, dass die zumindest eine Tracersubstanz speziell ausgewählt und/oder speziell angeordnet, beispielsweise speziell auf- und/oder eingebracht ist, so dass in dem zumindest einen Betriebszustand Stoffportionen der zumindest einen Tracersubstanz in eine Umgebung, insbesondere eine zumindest teilweise gasgefüllte Umgebung oder ein umgebendes Vakuum, übergehen. Vorzugsweise gehen einzelne Moleküle der zumindest einen Tracersubstanz in eine Gasphase über und erreichen über eine zufällige Molekülbewegung in der zumindest teilweise gasgefüllten Umgebung und/oder durch einen natürlich und/oder künstlich gezielt erzeugten Gasstrom eine Position der zumindest einen Detektoreinheit. Unter "in zumindest einen Betriebszustand die zumindest eine Tracersubstanz aufweisen" soll insbesondere verstanden werden, dass die Tracereinheit einen Vorrat der zumindest einen Tracersubstanz aufweist, der nach einer vollständigen Abgabe nicht mehr zur Verfügung steht. Unter einer "speziell zugesetzten Tracersubstanz" soll insbesondere eine Substanz verstanden werden, die zusätzlich zu einem Material eines Bauteils an einer Oberfläche des Bauteils oder einer Umhüllung oder einer Verpackung des Bauteils und/oder in und/oder auf dem Bauteil, der Umhüllung oder der Verpackung des Bauteils angeordnet ist, die insbesondere gegenüber einer Umgebung einen Dampfdruck aufweist, der zumindest um 0,1 % oder zehn Prozent, vorteilhaft zumindest um fünfzig Prozent und vorzugsweise zumindest um hundert Prozent höher ist als ein Dampfdruck von Materialien des Bauteils oder einer Umgebung des Bauteils und die in Bezug auf die zumindest eine Detektoreinheit dahingehend ausgewählt wurden, dass eine Detektion durch die zumindest eine Detektoreinheit schon bei einer geringen Konzentration der zumindest einen Tracersubstanz in der Umgebung erfolgt. Insbesondere ist die zumindest eine Tracersubstanz vorzugsweise verschieden von bei einer Gefahr auftretenden, insbesondere gesundheitsschädlichen, Stoffen, wie beispielsweise bei einem Brand auftretende Gase und/oder Aerosolpartikeln wie beispielsweise Rauchpartikeln einer sich durch Kabelbrand zersetzenden Kabelisolierung. Insbesondere ist die zumindest eine Tracersubstanz auch bei einem vollständigen Austritt einer gesamten in der Tracereinheit vorhandenen Stoffmenge in daraus resultierenden Konzentrationen für Menschen ungefährlich. Die Tracersubstanz kann beispielsweise von organischen Substanzen wie beispielsweise Alkoholen, Ketonen, Geruchsstoffen, Aromastoffen und/oder von anorganischen Substanzen wie beispielsweise Ammoniak oder Schwefelwasserstroff gebildet sein. Insbesondere ist die Tracersubstanz speziell ausgewählt und/oder in einer speziell behandelten Form aufgebracht, so dass sie bei einer Änderung von Umweltbedingungen auf einen Störzustand hin vor einem Eintreten des Störzustands freigesetzt und von der Detektoreinheit detektiert wird, beispielsweise indem sie bei einer Erwärmung eines Kabels bei Überschreiten einer Grenztemperatur vor einem Entstehen eines Schmorbrands einer Kabelisolierung oder bei einem bereits geringen Druckabfall oder bei einer Druckerhöhung im zu überwachenden Bauteil freigesetzt wird. Vorzugsweise weisen Moleküle der zumindest einen Tracersubstanz eine geringe Molekülgröße auf, so dass sie durch ein Material, in dem die Moleküle der Tracersubstanz eingebracht sind, diffundieren oder aus kleinen mechanischen Verletzungen des Materials leicht entweichen können. Unter einer "Detektoreinheit" soll insbesondere eine Einheit mit zumindest einem Detektorelement zu einer Detektion der zumindest einen Tracersubstanz verstanden werden, die insbesondere bei einer Detektion eines Überschreitens einer vorbestimmten Grenzkonzentration der zumindest einen Tracersubstanz ein Signal, vorzugsweise ein elektrisches, elektronisches, mechanisches, visuelles oder akustisches Signal aussendet. Grundsätzlich kann eine Detektion, mittels der die Detektoreinheit die zumindest eine Tracersubstanz detektiert, auf unterschiedlichen Detektionsprinzipien beruhen, beispielsweise auf einer optischen Absorptionsmessung, einer Gaschromatographie, einer Gaschromatographie mit einer daran gekoppelten Massenspektrometrie, einer Infrarotspektroskopie, einer Fourier-Transformations-Infrarotspektroskopie, einer lonenmobilitätsspektrometrie, einer lonisationsdetektion, einem Verfahren bei dem Schwingungseigenschaften und/oder eine Kapazität und/oder ein Leitwert eines Sensors durch die zumindest eine Tracersubstanz verändert wird, beispielsweise bei einem Metall-Oxid-Sensor. Das vorzugsweise elektronische Signal kann grundsätzlich über ein Kabel und/oder drahtlos übertragen werden. Grundsätzlich kann die Detektoreinheit auch eine Vielzahl von Detektorelementen aufweisen, die zu einer Detektion der zumindest einen Tracersubstanz oder zu einer Detektion unterschiedlicher Tracersubstanzen vorgesehen sind, wobei grundsätzlich anstatt einer Signalgebung bei Überschreitung einer vorbestimmten Grenzkonzentration auch eine Signalgebung bei einer Bestimmung eines Musters aus mehreren Messsignalen erfolgen kann. Es kann insbesondere eine Detektion von zumindest einem Störzustand vor einem Eintreten einer Gefährdung durch den zumindest einen Störzustand erreicht werden.

In einer Weiterbildung der Erfindung wird vorgeschlagen, dass die zumindest eine Tracereinheit zumindest ein Trägerelement aufweist, an und/oder in und/oder auf welchem die zumindest eine Tracersubstanz angeordnet ist. Darunter, dass "die zumindest eine Tracersubstanz an und/oder in und/oder auf dem zumindest einem Trägerelement angeordnet ist", soll insbesondere verstanden werden, dass die zumindest eine Tracersubstanz zumindest auf einer Oberfläche des Trägerelements und/oder in einem Material des Trägerelements angeordnet ist, wobei die zumindest eine Tracersubstanz grundsätzlich eine gesamte Oberfläche bedecken und/oder in ein gesamtes Material des Trägerelements eingemischt sein kann und/oder lediglich abschnittsweise aufgetragen und/oder eingemischt und/oder eingebracht sein kann. Insbesondere kann die zumindest eine Tracersubstanz während einer Herstellung auf die zumindest eine Oberfläche des Trägerelements aufgetragen und/oder bei der Herstellung der Oberfläche des Trägerelements auf dieser angeordnet werden. Insbesondere kann die zumindest eine Tracersubstanz bei einer Herstellung des zumindest einen Trägerelements in ein Material des zumindest eine Trägerelements eingemischt und/oder nachträglich eingebracht werden, wobei das Trägerelement speziell für eine Aufnahme der zumindest einen Tracersubstanz vorgesehene Hohlräume oder eine poröse Struktur aufweisen kann, in der die zumindest eine Tracersubstanz gebunden und/oder eingebracht werden kann. Das Trägerelement kann beispielsweise als eine Beschichtung von zumindest einer Oberfläche einer Baueinheit, als ein auf einem Bauelement der Baueinheit, beispielsweise auf einem Transformator, auf einem stromleitenden Kabel oder auf einer medizinischen Einheit und/oder einem medizinischen Gerät wie einem Kernspintomographen, angebrachtes separates Element, beispielsweise eine an dem Bauelement befestigte Plakette, als ein in eine Baueinheit integriertes Element und/oder als ein in ein Material des zumindest einen Bauelements der Baueinheit eingearbeitetes Element ausgebildet sein. Unter einer "Baueinheit" soll insbesondere zumindest eine Einheit mit zumindest einem Bauelement verstanden werden, wie insbesondere beispielsweise eine sich in einem Betrieb durch Stromwärme erwärmende Vorrichtung, beispielsweise ein Computer oder eine Klimaanlage oder ein medizinisches Gerät wie beispielsweise ein Kernspintomograph oder eine Röntgenvorrichtung, und/oder ein Funktionsbauteil wie beispielsweise stromführende Kabel, Transformatoren und/oder elektrische und/oder druckbeaufschlagte Einrichtungen, eine Oberfläche einer Vorrichtung wie beispielsweise eine Abdeckung eines Computers oder eines medizinischen Geräts, eine Oberfläche eines Funktionsbauteils, eine sonstige Vorrichtung wie beispielsweise ein Experimentiertisch oder eine Oberfläche von einer, einen Raum begrenzenden Wandungen, wobei vorzugsweise in dem durch die Wandungen begrenzten Raum eine erhöhte Brandgefahr durch betriebene Gerätschaften und/oder gelagertes Material besteht und/oder der besonderen Umweltbedingungen, beispielsweise einem umgebenden luftleeren Raum bei einer Raumfahrt, ausgesetzt ist. Insbesondere kann die zumindest eine Baueinheit beispielsweise von einer Fläche gebildet sein, auf die ein in einem Experiment betriebener Laser bei fehlerhafter Ausrichtung gerichtet sein kann und die durch den Laser beschädigt werden könnte. Die zumindest eine Tracersubstanz kann in einer Reinform an und/oder in dem zumindest einen Trägerelement aufgetragen werden und/oder gebunden sein, oder in einer gebundenen Form, beispielsweise an ein Adsorbermaterial gebunden, in einer Lösung und/oder einer Mizelle aufgenommen und/oder in einer Mikrokapsel eingebracht und/oder in und/oder auf dem Trägerelement aufgetragen und/oder gebunden sein. Bei einer Bindung der zumindest einen Tracersubstanz in einem Material des zumindest einen Trägerelements ist die Tracersubstanz dazu vorgesehen, durch das Material des zumindest einen Trägerelements zu diffundieren oder durch mechanische Beschädigung einer Umhüllung freigesetzt wird. Unter "vorgesehen" soll insbesondere speziell ausgewählt, ausgelegt und/oder ausgestattet verstanden werden. Darunter, dass eine Substanz zu einer bestimmten Funktion vorgesehen ist, soll insbesondere verstanden werden, dass die Substanz dahingehend ausgewählt ist, diese bestimmte Funktion in zumindest einem Anwendungs- und/oder Betriebszustand zu erfüllen und/oder auszuführen. Es kann insbesondere eine gezielte Einbringung der zumindest einen Tracersubstanz, vorzugsweise an besonders gefährdeten Positionen, erreicht werden.

Des Weiteren wird vorgeschlagen, dass das Trägerelement zumindest ein Adsorbermaterial aufweist. Unter einem "Adsorbermaterial" soll insbesondere ein Material verstanden werden, dass dazu vorgesehen ist, die zumindest eine Tracersubstanz an einer Oberfläche und/oder in Materialporen, insbesondere an Oberflächen von Materialporen begrenzenden Materialwandungen oder in sonstigen Hohlräumen zu adsorbieren. Das Adsorbermaterial kann beispielsweise von Aktivkohle, Nanomaterialien wie Kohlenstoff-Nanoröhrchen, stationären Phasen aus dem Bereich der Gaschromatographie oder der Gasreinigung, Mikrokapseln, Mizelle und/oder einem Adsorberharz, gebildet sein. Die zumindest eine Tracersubstanz kann bei einer Herstellung des Adsorbermaterials bereits an und/oder von dem Adsorbermaterial adsorbiert sein und/oder während und/oder nach der Herstellung in das Adsorbermaterial zur Adsorption eingebracht werden. Es kann insbesondere eine sichere Aufbringung der zumindest einen Tracersubstanz erreicht und diese insbesondere gegen eine hohe Freisetzung unter Normalbetriebsbedingungen gesichert werden.

Weiterhin wird vorgeschlagen, dass die zumindest eine Tracereinheit zumindest eine Beschichtung mit der zumindest einen Tracersubstanz umfasst. Die Beschichtung kann die zumindest eine Tracersubstanz in einer Reinform und/oder in einer gebundenen Form enthalten. Insbesondere kann die zumindest eine Beschichtung nach einer Herstellung zumindest einer Baueinheit nachträglich an beliebigen Positionen, insbesondere besonders gefährdeten Positionen, aufgetragen werden. Vorzugsweise ist die Beschichtung an einer zu einer Umgebung offenen Oberfläche des zumindest einen Trägerelements und/oder der zumindest einen Baueinheit angeordnet, so dass freigesetzte Stoffportionen der zumindest einen Tracersubstanz direkt zu der zumindest einen Detektoreinheit gelangen können. Es kann insbesondere eine schnelle und sichere Aufbringung der zumindest einen Tracereinheit erreicht werden.

Ferner wird erfindungsgemäß vorgeschlagen, dass die zumindest eine Tracereinheit zumindest teilweise einstückig mit zumindest einer Baueinheit ausgebildet ist. Darunter, dass "die zumindest eine Tracereinheit zumindest teilweise einstückig mit zumindest einer Baueinheit ausgebildet ist", soll insbesondere verstanden werden, dass die zumindest eine Tracereinheit und die zumindest eine Baueinheit zumindest ein gemeinsames Element aufweisen. Insbesondere kann die zumindest eine Tracersubstanz auf zumindest ein Bauelement der zumindest einen Baueinheit, insbesondere unmittelbar, beispielsweise durch ein kontinuierliches, abschnittsweises oder punktweises Beschichtungsverfahren, aufgetragen sein und/oder in ein Material zumindest eines Bauelements der zumindest einen Baueinheit eingearbeitet und/oder bei einer Herstellung des zumindest einen Bauelements und/oder des Materials des zumindest einen Bauelements in das zumindest eine Bauelement eingebracht worden sein. Es kann insbesondere eine direkte Kontaktierung besonders gefährdeter und/oder besonders schutzbedürftiger Positionen erreicht und ein separates Bauteil für die zumindest eine Tracereinheit eingespart werden.

Des Weiteren wird erfindungsgemäß vorgeschlagen, dass der zumindest eine Störzustand eine unzulässige Temperaturänderung von zumindest einer Baueinheit ist. Unter einer "unzulässigen Temperaturänderung" soll insbesondere eine Temperaturänderung, bevorzugt eine Erwärmung, von zumindest einem Bauelement der zumindest einen Baueinheit verstanden werden, durch die eine Temperatur der zumindest einen Baueinheit einen vorher festgelegten, in einem Normalbetrieb zu erwartenden Temperaturbereich verlässt. Vorzugsweise ist die unzulässige Temperaturänderung derart ausgewählt, dass bei einer Detektion freigesetzter Stoffportionen der zumindest einen Tracersubstanz die zumindest eine Baueinheit mit einer hohen Wahrscheinlichkeit noch unbeschädigt ist. Insbesondere ist eine unzulässige Erwärmung der zumindest einen Baueinheit geringer als eine Erwärmung der zumindest einen Baueinheit, die zu einer Beschädigung der zumindest einen Baueinheit durch Materialzersetzung und/oder Brand führt. Es kann insbesondere eine Detektion einer Brandgefahr erreicht und somit eine Sicherheit erhöht werden.

Weiterhin wird vorgeschlagen, dass die unzulässige Temperaturänderung ein Überschreiten einer vorgegebenen Grenztemperatur unterhalb einer Schädigungstemperatur der zumindest einen Baueinheit ist. Es kann insbesondere eine Detektion einer Brandgefahr vor einem Auftreten eines Brands erreicht und somit eine Sicherheit erhöht werden.

Ferner wird erfindungsgemäß vorgeschlagen, dass zumindest ein Störzustand eine Druckänderung, und zwar eine Unterschreitung eines vorher festgelegten Grenzwerts eines Luft- und/oder Gasdrucks ist. Insbesondere unter weitgehenden Vakuumbedingungen, beispielsweise an Bord eines Raumfahrzeug, stellen Druckabfälle eine große Gefahr dar, da sie mit einem Verlust lebenswichtiger und nur begrenzt mitgeführter Atmosphärengase einhergehen und ferner strukturelle Beschädigungen bewirken kann. Es kann insbesondere eine Sicherheit erhöht werden.

Weiterhin wird erfindungsgemäß vorgeschlagen, dass die zumindest eine Tracereinheit in zumindest einem Betriebszustand zumindest eine speziell zugesetzte weitere Tracersubstanz aufweist. Grundsätzlich können die zumindest eine Tracersubstanz und die zumindest eine weitere Tracersubstanz miteinander vermischt werden oder getrennt voneinander vorliegen. Insbesondere kann die Detektoreinheit ein Detektorelement für eine Detektion der zumindest einen Tracersubstanz und ein Detektorelement für eine Detektion der zumindest einen weiteren Tracersubstanz aufweisen, so dass auch bei einem Ausfall des Detektorelements für die zumindest eine Tracersubstanz der zumindest eine Störzustand durch Detektion der zumindest einen weiteren Tracersubstanz weiterhin detektiert werden kann. Erfindungsgemäß ist eine freigesetzte Stoffportion der zumindest einen weiteren Tracersubstanz für die Detektion des weiteren Störzustands durch die Detektoreinheit vorgesehen, sodass mittels der zumindest einen Tracereinheit zumindest zwei Störzustände detektiert werden können. Grundsätzlich können die zumindest eine Tracersubstanz und die zumindest eine weitere Tracersubstanz für die Detektion desselben Störzustands an unterschiedlichen Orten vorgesehen sein. Es kann insbesondere eine Erhöhung einer Detektionswahrscheinlichkeit und einer Detektionssicherheit und/oder eine Detektion unterschiedlicher Störzustände erreicht werden sowie insbesondere zusätzlich eine Ortsauflösung des Störzustands erreicht werden.

Ferner wird erfindungsgemäß vorgeschlagen, dass die zumindest eine Tracersubstanz und die zumindest eine weitere Tracersubstanz zumindest teilweise an und/oder auf verschiedenen Baueinheiten und/oder unterschiedlichen Bauelementen zumindest einer Baueinheit angeordnet sind. Es kann insbesondere eine Erleichterung einer örtlichen Lokalisierung einer Quelle des Störzustands erreicht werden.

Des Weiteren wird erfindungsgemäß vorgeschlagen, dass die zumindest eine Detektoreinheit dazu vorgesehen ist, den zumindest einen Störzustand mittels einer Mustererkennung von Messsignalen der zumindest einen Tracersubstanz und der zumindest einen weiteren Tracersubstanz zu ermitteln. Insbesondere kann die zumindest eine Detektoreinheit einen Störzustand durch eine Mustererkennung von Signalen einer Vielzahl von Tracersubstanzen, beispielsweise von acht Tracersubstanzen, ermitteln. Grundsätzlich kann die Detektoreinheit auch zu einer Ermittlung zumindest eines Störzustands mittels einer Mustererkennung von Signalen aus weniger oder mehr als acht Tracersubstanzen ausgebildet sein. Es kann insbesondere eine sichere Detektion des zumindest eine Störzustands auch bei einem Auftreten eines Gasgemischs mit einer Vielzahl chemisch ähnlicher Stoffe, auf die die Detektorelemente der zumindest einen Detektoreinheit ansprechen, durch Detektion eines spezifischen Signals mehrerer Tracersubstanzen erreicht werden.

Ferner wird vorgeschlagen, dass die zumindest eine Detektoreinheit zu einer Detektion einer Abnahme und/oder einer Unterbrechung einer Freisetzung der zumindest einen Tracersubstanz vorgesehen ist. Dies stellt einen zu dem üblichen Verfahren einer Detektion einer bei dem zumindest einen Störzustand auftretenden chemischen Substanz inversen Modus dar. Insbesondere ist die zumindest eine Tracersubstanz dazu vorgesehen, unter Normalbedingungen in einer Menge freigesetzt zu werden, die zu einer starken Signaländerung der zumindest einen Detektoreinheit führt und bei Eintreten eines Störzustands in einer wesentlich geringeren Menge abgegeben zu werden, beispielsweise indem durch eine unzulässige Erwärmung eine im Wesentlichen flüchtige Tracersubstanz eine im Wesentlichen nichtflüchtige Verbindung mit einem Material eingeht, auf dem die Tracersubstanz aufgetragen und/oder eingebracht ist. Es kann insbesondere eine Sicherheit erhöht werden.

Des Weiteren wird vorgeschlagen, dass die zumindest eine Detektoreinheit zumindest eine Datenschnittstelle aufweist, die zu einer Weiterleitung eines detektierten Störzustands an ein übergeordnetes Überwachungssystem vorgesehen ist. Unter einem "übergeordneten Überwachungssystem" soll insbesondere ein Überwachungssystem verstanden werden, dass zumindest ein Bauteil, ein Gerät und/oder einen Raum und vorteilhaft mehrere Bauteile, Geräte und/oder Räume mittels Detektionsvorrichtung überwacht, und einen durch zumindest eine Detektionsvorrichtung detektierten Störzustand mittels zumindest einer Ausgabevorrichtung zumindest visuell, optisch und/oder akustisch anzeigt. Vorzugweise umfasst das übergeordnete Überwachungssystem zumindest eine Speichereinheit, in der zumindest eine Information des Störzustands zusammen mit weiteren Zusatzinformationen wie beispielsweise Zeit und Ort des Störzustands gespeichert wird. Es kann insbesondere eine Sicherheit erhöht werden.

Ferner wird erfindungsgemäß vorgeschlagen, dass die zumindest eine Detektoreinheit zumindest eine Signaleinheit aufweist, die dazu vorgesehen ist, einen detektierten Störzustand zu signalisieren. Unter einer "Signaleinheit" soll insbesondere eine Einheit verstanden werden, die dazu vorgesehen ist, ein akustisches, visuelles, elektrisches und/oder mechanisches Signal zu geben, und die zu einer Signalgebung eine Signalvorrichtung wie beispielsweise eine Sirene, einen Lautsprecher, eine Klingel, eine Warnleuchte, eine mechanische oder elektronische Anzeigetafel, ein mittels einer Mechanik aufklappbares Anzeigeschild und/oder einen Bildschirm aufweist. Vorzugsweise ist die Signaleinheit in einem durch die Detektoreinheit überwachten Raum und/oder in einer Nähe eines durch die Detektoreinheit überwachten Bauteils angeordnet. Grundsätzlich kann die Detektionsvorrichtung eine Speichereinheit umfassen, in der zumindest eine Information des Störzustands zusammen mit weiteren Zusatzinformationen wie beispielsweise Zeit und Ort des Störzustand gespeichert wird. Es kann insbesondere mit einer hohen Sicherheit auf einem zumindest potentiellen und/oder einen sich anbahnenden Gefahrenzustand aufmerksam gemacht werden.

Weiterhin wird ein Verfahren zur Detektion eines Störzustands mit einer erfindungsgemäßen Detektionsvorrichtung vorgeschlagen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Detektionsvorrichtung mit einer Tracereinheit,
- Fig. 2: eine Detailansicht der Tracereinheit der erfindungsgemäßen Detektionsvorrichtung,
- Fig. 3: eine alternative Detektionsvorrichtung mit einer alternativen Ausbildung einer Tracereinheit,
- Fig. 4: eine weitere alternative Detektionsvorrichtung mit einer alternativen Ausbildung einer Tracereinheit, und
- Fig. 5: eine schematische Darstellung einer weiteren alternativen erfindungsgemäßen Detektionsvorrichtung mit einer Tracereinheit.

### Beschreibung der Ausführungsbeispiele

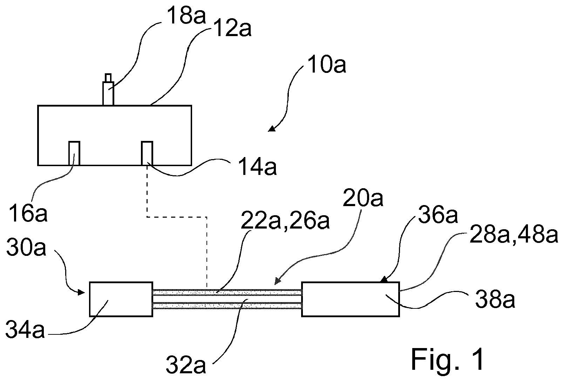

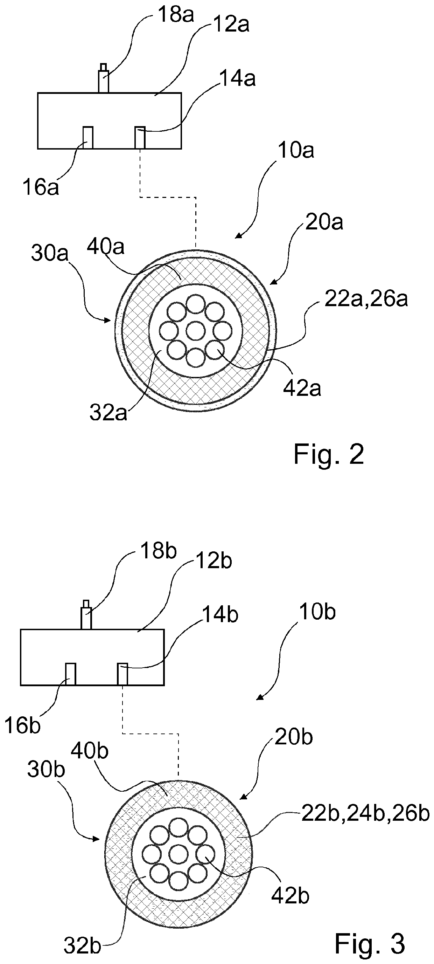

Fig. 1 zeigt eine erfindungsgemäße Detektionsvorrichtung 10a zur Detektion von zumindest einem Störzustand mit einer Tracereinheit 20a, die in zumindest einem Betriebszustand eine speziell zugesetzte Tracersubstanz 26a aufweist, und mit einer Detektoreinheit 12a zu einer Detektion einer freigesetzten Stoffportion der Tracersubstanz 26a. Die Tracereinheit 20a weist ein Trägerelement 22a auf, an welchem die Tracersubstanz 26a angeordnet ist. Die Tracereinheit 20a ist teilweise einstückig mit einem Bauelement 34a einer Baueinheit 30a ausgeführt und umfasst eine Beschichtung mit der Tracersubstanz 26a, die auf einer Oberfläche des Bauelements 34a, das somit einstückig mit dem Trägerelement 22a ausgeführt ist, angeordnet ist. Die Tracereinheit 20a ist somit teilweise einstückig mit der Baueinheit 30a ausgebildet. Die Baueinheit 30a ist von einem als ein Gaslaser ausgebildeten Bauelement 32a gebildet, das über ein als Kabelbaum mit einer Mehrzahl von Kabeln 42a (Fig. 2) ausgebildetes Bauelement 34a mit einer weiteren Baueinheit 36a, die ein als Spannungsversorgung ausgebildetes Bauelement 38a aufweist, verbunden ist. Die Tracersubstanz 26a ist als eine Beschichtung auf einer Kabelisolierung 40a des Bauelements 34a aufgetragen. Der Störzustand, der mit der Detektionsvorrichtung 10a detektiert wird, ist von einer unzulässigen Temperaturänderung von der Baueinheit 30a gebildet, wobei die unzulässige Temperaturänderung ein Überschreiten einer vorgegebenen Grenztemperatur unterhalb einer Schädigungstemperatur der zumindest einen Baueinheit 30a ist. Die Schädigungstemperatur entspricht einer Zersetzungstemperatur der Kabelisolierung 40a. Aufgrund eines Dampfdrucks der Tracersubstanz 26a gehen unter Normalbetriebsbedingungen der Baueinheit 30a einige Moleküle der Tracersubstanz 26a aus der Beschichtung in die Gasphase über und gelangen durch eine Atmosphäre zu einem für eine Detektion der Tracersubstanz 26a speziell ausgelegten Detektorelement 14a, das mittels einer optischen Absorptionsmessung die Tracersubstanz 26a detektiert. Grundsätzlich kann das Detektorelement 14a die Tracersubstanz 26a mittels eines anderen Verfahrens, beispielsweise über einen durch die Tracersubstanz 26a veränderten elektrischen Leitwert von Metall-Oxid-Sensoren, detektieren. Eine durch den Dampfdruck unter Normalbetriebsbedingungen, wobei Normalbetriebsbedingungen Betriebsbedingungen eines sicheren Betriebszustands der Baueinheit 30a entsprechen, erreichbare Konzentration der Tracersubstanz 26a liegt unterhalb einer Detektionsschwelle des Detektorelements 14a. Bei der unzulässigen Erwärmung dampft jedoch eine größere Stoffportion der Tracersubstanz 26a aus der Beschichtung ab und eine resultierende Konzentration der Tracersubstanz 26a an dem Detektorelement 14a überschreitet die Detektionsschwelle, so dass der Störzustand detektiert wird. Die Tracersubstanz 26a ist speziell dafür ausgewählt, bei der unzulässigen Erwärmung bei Überschreiten der Grenztemperatur eine Erhöhung einer Freisetzungsrate zu erfahren, so dass bei Überschreiten der Grenztemperatur zumindest ein Prozent mehr Moleküle pro Zeiteinheit als unter Normalbetriebsbedingungen freigesetzt werden. Grundsätzlich kann auch eine Substanz als Tracersubstanz 26a ausgewählt werden, welche bei einem Überschreiten der Grenztemperatur eine Reaktion durchmacht, welche einen Übergang von Molekülen der Substanz in die Gasphase verhindert oder eine Übergangswahrscheinlichkeit stark herabsetzt. Die Detektionsvorrichtung 10a wird in diesem Fall in einem inversen Modus zu dem ansonsten üblichen Modus, in dem ein Störzustand durch eine Detektion einer durch den Störzustand zumindest verstärkt auftretenden Substanz detektiert wird, betrieben und die Detektoreinheit 12a ist in dieser Variante dazu vorgesehen, eine Abnahme und/oder eine Unterbrechung einer Freisetzung der Tracersubstanz 28a zu detektieren. Die Detektoreinheit 12a weist ferner eine Datenschnittstelle 18a zu einer Weiterleitung eines detektierten Störzustands an ein übergeordnetes Überwachungssystem auf.

Die Tracereinheit 20a weist eine speziell zugesetzte weitere Tracersubstanz 28a auf, die auf einem weiteren Trägerelement 48a, das einstückig mit einer Oberfläche des Bauelements 38a der Baueinheit 36a ausgeführt ist. Die Tracersubstanz 26a und die weitere Tracersubstanz 28a sind somit an verschiedenen Baueinheiten 30a, 36a angeordnet. Alternativ könnten sie auch beispielsweise auf unterschiedlichen Bauelementen 32a, 34a der Baueinheit 30a angeordnet sein. Die weitere Tracersubstanz 28a ist für eine Detektion desselben Störzustands wie die Tracersubstanz 26a ausgelegt, grundsätzlich kann eine weitere Tracersubstanz 28a jedoch auch zur Detektion eines weiteren, von einem der Tracersubstanz 26a zugeordneten Störzustand verschiedenen Störzustands ausgewählt sein. Die Detektoreinheit 12a weist ein weiteres Detektorelement 16a auf, das speziell für eine Detektion der weiteren Tracersubstanz 28a ausgelegt ist. Mittels der unterschiedlichen Detektorelemente 14a, 16a für die unterschiedlichen Tracersubstanzen 26a, 28a ist eine Lokalisierung des Störzustands möglich, so dass eine zu dem Störzustand führende Fehlerquelle rascher gefunden werden kann. In einer weiteren alternativen Ausgestaltung kann die Detektoreinheit 12a dazu vorgesehen sein, den zumindest einen Störzustand mittels einer Mustererkennung von Signalen der Tracersubstanz 26a und der weiteren Tracersubstanz 28a zu ermitteln, anstatt durch ein Detektieren einer Überschreitung einer einzelnen Grenzkonzentration.

Grundsätzlich kann die Tracersubstanz 26a und/oder die weitere Tracersubstanz 28a auch speziell zu einer Detektion einer eine Grenztemperatur unterschreitenden Temperatur einer Baueinheit 30a ausgewählt werden, womit insbesondere ein Betrieb der Detektionsvorrichtung 10a in dem inversen Modus kombiniert werden kann. Weiterhin kann die Tracersubstanz 26a und/oder die weitere Tracersubstanz 28a auch zu einer Detektion einer Druckerhöhung in einem Bauteil vorgesehen sein, beispielsweise an einer Gasleitung.

In den Figuren 3 bis 5 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 2 verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figuren 3 bis 5 ist der Buchstabe a durch die Buchstaben b bis d ersetzt.

In Fig. 3 ist eine alternative Detektionsvorrichtung 10b zur Detektion von zumindest einem Störzustand mit einer Tracereinheit 20b, die in zumindest einem Betriebszustand eine speziell zugesetzte Tracersubstanz 26b aufweist, und mit einer Detektoreinheit 12b zu einer Detektion einer freigesetzten Stoffportion der Tracersubstanz 26b dargestellt. Die Tracereinheit 20b weist ein Trägerelement 22b auf, das einstückig mit einer Kabelisolierung 40b eines als Kabelbaum mit einer Vielzahl von Kabeln 42d ausgebildeten Bauelements 32b einer Baueinheit 30b ausgeführt ist. Das Trägerelement 22b weist ein von Aktivkohle gebildetes Adsorbermaterial 24b auf, an und in dem die Tracersubstanz 26b adsorbiert ist.

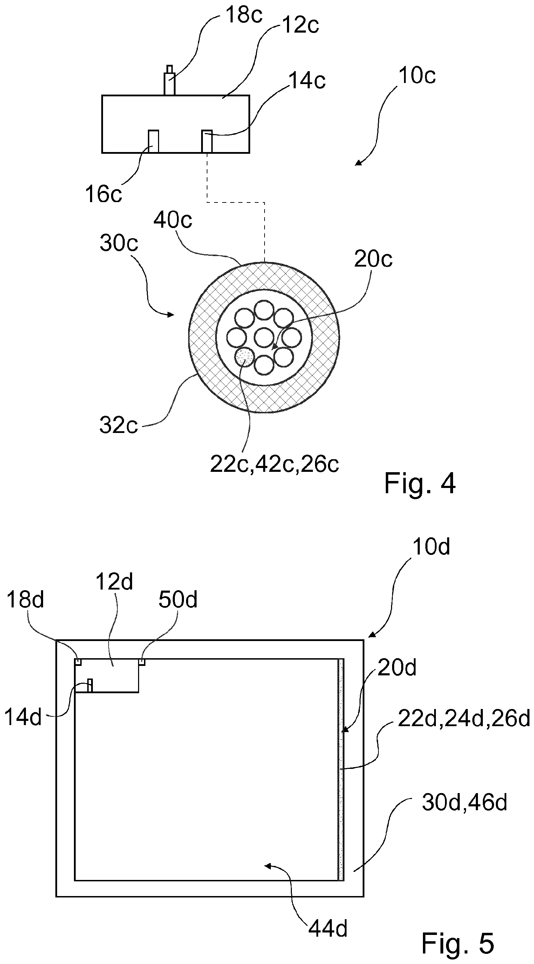

In einer weiteren alternativen Ausgestaltung einer Detektionsvorrichtung 10c zur Detektion von zumindest einem Störzustand mit einer Tracereinheit 20c, die in zumindest einem Betriebszustand eine speziell zugesetzte Tracersubstanz 26c aufweist, und mit einer Detektoreinheit 12c zu einer Detektion einer freigesetzten Stoffportion der Tracersubstanz 26c (Fig. 4), ist ein Trägerelement 22c der Tracereinheit 20c einstückig mit einer Seele eines Kabels 42c eines als Kabelbaum ausgebildeten Bauelements 32c einer Baueinheit 30c ausgeführt. Bei einer unzulässigen Erwärmung des Bauelements 32c der Baueinheit 30c diffundiert eine gegenüber Normalbetriebsbedingungen erhöhte Menge der Tracersubstanz 26a aus dem Kabel 42c und durch eine Kabelisolierung 40c des Bauelements 32c zu der Detektoreinheit 12c, in der in einem Detektorelement 14c ein Anstieg einer Konzentration der Tracersubstanz 26c und somit der Störzustand detektiert wird.

Eine weitere alternative Ausgestaltung einer Detektionsvorrichtung 10d zur Detektion von zumindest einem Störzustand mit einer Tracereinheit 20d, die in zumindest einem Betriebszustand eine speziell zugesetzte Tracersubstanz 26d aufweist, und mit einer Detektoreinheit 12d zu einer Detektion einer freigesetzten Stoffportion der Tracersubstanz 26d, ist in Fig. 5 dargestellt. Der Störzustand, der durch die Detektionsvorrichtung 10d detektiert wird, ist eine von einem Druckabfall gebildete Druckänderung. Die Tracersubstanz 26d ist hierbei als eine Beschichtung auf einer Oberfläche einer Wandung 46d angeordnet, die somit einstückig mit einem Trägerelement 22d der Tracereinheit 20d ausgebildet ist. Die Wandung 46d bildet eine Baueinheit 30d. Die Wandung 46d begrenzt einen Raum 44d einer Raumkapsel gegenüber einem umgebenden Vakuum bei einem Weltraumflug. Bei einer Beschädigung der Wandung 46d, beispielsweise einem Riss, entweicht Atmosphäre aus dem Raum 44d in das umgebende Vakuum und ein Druckabfall tritt ein. Durch ein Entweichen der Atmosphäre geht eine Konzentration der Tracersubstanz 26d an einem Detektorelement 14d zurück. Die in einem inversen Modus betriebenen Detektoreinheit 12d detektiert den Störzustand, sobald die Konzentration der Tracersubstanz 26d unter eine vorher festgelegte Grenzkonzentration fällt, die derart ausgewählt ist, dass bei Unterschreiten der Grenzkonzentration eine Gefährdung für Menschen durch Luftmangel ausgeschlossen werden kann. Die Detektoreinheit 12d weist eine Signaleinheit 50d auf, die dazu vorgesehen ist, einen detektierten Störzustand zu signalisieren. Die Signaleinheit 50d ist als eine mit einer Sirene kombinierte Warnleuchte ausgebildet, die bei einem detektierten Druckabfall ein akustisches und ein visuelles Signal aussendet, mittels dem in dem Raum 44d anwesende Personen auf den Druckabfall aufmerksam gemacht werden. Die Detektoreinheit 12d weist eine Datenschnittstelle 18d auf, mittels der ein von der Detektionsvorrichtung 10d detektierter Störzustand an ein übergeordnetes Überwachungssystem gemeldet wird, in dem der detektierte Störzustand mit Zusatzinformationen über Ort und Zeit eines Auftretens in einer Speichereinheit gespeichert wird.

### Bezugszeichen

- 10: Detektionsvorrichtung
- 12: Detektoreinheit
- 14: Detektorelement
- 16: Detektorelement
- 18: Datenschnittstelle
- 20: Tracereinheit
- 22: Trägerelement
- 24: Adsorbermaterial
- 26: Tracersubstanz
- 28: Tracersubstanz
- 30: Baueinheit
- 32: Bauelement
- 34: Bauelement
- 36: Baueinheit
- 38: Bauelement
- 40: Kabelisolierung
- 42: Kabel
- 44: Raum
- 46: Wandung
- 48: Trägerelement
- 50: Signaleinheit

## Patentansprüche

1. Detektionsvorrichtung zur Detektion von zumindest einem Störzustand mit zumindest einer Tracereinheit (20a - d), die in zumindest einem Betriebszustand zumindest eine speziell zugesetzte Tracersubstanz (26a - d) aufweist, und mit zumindest einer Detektoreinheit (12a - d) zu einer Detektion einer in zumindest einem Störzustand freigesetzten Stoffportion der zumindest einen Tracersubstanz (26a - d), wobei die zumindest eine Tracereinheit (20a - d) zumindest teilweise einstückig mit zumindest einer Baueinheit (30a - d, 36a) ausgebildet ist, wobei die zumindest eine Tracereinheit (20a) in zumindest einem Betriebszustand zumindest eine speziell zugesetzte weitere Tracersubstanz (28a) aufweist, wobei die zumindest eine Tracersubstanz (26a) und die zumindest eine weitere Tracersubstanz (28a) zumindest weitgehend an und/oder auf verschiedenen Baueinheiten (30a, 36a) und/oder unterschiedlichen Bauelementen (32a, 34a, 38a) zumindest einer Baueinheit (30a, 36a) angeordnet sind, wobei die freigesetzte Stoffportion der zumindest einen weiteren Tracersubstanz (28a) für die Detektion eines weiteren Störzustands durch die Detektoreinheit (12a-d) vorgesehen ist, sodass mittels der zumindest einen Tracereinheit (20a) zumindest zwei Störzustände detektiert werden können, wobei die Detektoreinheit (12a) eine Vielzahl von Detektorelementen (14a, 16a) aufweist, die zu einer Detektion der unterschiedlichen Tracersubstanzen (26a-d, 28a) vorgesehen sind, wobei die Detektorelemente (14a, 16a) Metall-Oxid-Sensoren umfassen, die die eine Tracersubstanz (26a-d) mit einem Verfahren, bei dem ein Leitwert eines Metall-Oxid-Sensors durch die zumindest eine Tracersubstanz verändert wird, detektiert, wobei die Detektoreinheit (12a) dazu vorgesehen ist, den zumindest einen Störzustand mittels einer Mustererkennung von Messsignalen der zumindest einen Tracersubstanz und der zumindest einen weiteren Tracersubstanz zu ermitteln, wobei die zumindest eine Detektoreinheit (12d) zumindest eine Signaleinheit (50d) aufweist, die dazu vorgesehen ist, einen detektierten Störzustand zu signalisieren, wobei der zumindest eine Störzustand eine unzulässige Temperaturänderung von zumindest einer Baueinheit (30a - c, 36a) ist und wobei der zumindest eine weitere Störzustand eine Druckänderung, und zwar eine Unterschreitung eines vorher festgelegten Grenzwerts eines Luft- und/oder Gasdrucks, ist.

2. Detektionsvorrichtung nach Anspruch 1, **dadurch gekennzeichnet, dass** die zumindest eine Tracereinheit (20a - d) zumindest ein Trägerelement (22a - d, 48a) aufweist, an und/oder in und/oder auf welchem die zumindest eine Tracersubstanz (26a - d) angeordnet ist, wobei das zumindest ein Trägerelement (22b) zumindest ein Adsorbermaterial (24b) aufweist.

3. Detektionsvorrichtung nach einem der vorhergehenden Ansprüche, **dadurch gekennzeichnet, dass** die zumindest eine Tracereinheit (20a, 20d) zumindest eine Beschichtung mit der zumindest einen Tracersubstanz (26a, 26d) umfasst.

4. Detektionsvorrichtung nach einem der vorhergehenden Ansprüche, **dadurch gekennzeichnet, dass** die zumindest eine Detektoreinheit (12a - d) dazu vorgesehen ist, eine Abnahme und/oder eine Unterbrechung einer Freisetzung der zumindest einen Tracersubstanz (28a - d) zu detektieren.

5. Detektionsvorrichtung nach einem der vorhergehenden Ansprüche, **dadurch gekennzeichnet, dass** die zumindest eine Detektoreinheit (12a - c) zumindest eine Datenschnittstelle (18a - c) aufweist, die zu einer Weiterleitung eines detektierten Störzustands an ein übergeordnetes Überwachungssystem vorgesehen ist.

6. Verfahren zur Detektion eines Störzustands mit einer Detektionsvorrichtung (10a-d) nach einem der vorhergehenden Ansprüche.

## Claims

1. Detection device for detecting at least one fault state, with at least one tracer unit (20a - d) that comprises, in at least one operating state, at least one specifically added tracer substance (26 a-d), and with at least one detection unit (12a - d) for detecting a material portion of the at least one tracer substance (26a-d), which has been released in at least one fault state,
wherein the at least one tracer unit (20a-d) is embodied at least partly integrally with at least one assembly unit (30a-d, 36a),
wherein the at least one tracer unit (20a) comprises, in at least one operating state, at least one specifically added further tracer substance (28a),
wherein the at least one tracer substance (26a) and the at least one further tracer substance (28a) are arranged at least to a large extent at and/or on different assembly units (30a, 36a) and/or different assembly elements (32a, 34a, 38a) of at least one assembly unit (30a, 36a),
wherein the released material portion of the at least one further tracer substance (28a) is intended for detecting a further fault state by the detection unit (12a-d), allowing a detection of at least two fault states by means of the at least one tracer unit (20a),
wherein the detection unit (12a) comprises a plurality of detection elements (14a, 16a), which are configured for a detection of the different tracer substances (26a-d, 28a), wherein the detection elements (14a, 16a) comprise metal-oxide sensors, detecting the at least one tracer substance (26a-d) by a method in which a conductance of a metal-oxide sensor is changed by the at least one tracer substance, wherein the detection unit (12a) is configured to determine the at least one fault state by way of a pattern recognition of measuring signals of the at least one tracer substance and the at least one further tracer substance,
wherein the at least one detection unit (12d) comprises at least one signal unit (50d), which is configured for a signalization of a detected fault state,
wherein the at least one fault state is an inadmissible temperature change of at least one assembly unit (30a-c, 36a),
and wherein the at least one further fault state is a pressure change, namely a falling below a predefined limit value of an air pressure and/or gas pressure.

2. Detection device according to claim 1, **characterised in that** the at least one tracer unit (20a-d) comprises at least one carrier element (22a-d, 48a), at and/or on which the at least one tracer substance (26a-d) is arranged, wherein the at least one carrier element (22b) comprises at least one adsorber material (24b).

3. Detection device according to one of the preceding claims, **characterised in that** the at least one tracer unit (20a, 20d) comprises at least one coating with the at least one tracer substance (26a, 26d).

4. Detection device according to one of the preceding claims, **characterised in that** the at least one detection unit (12a-d) is configured to detect a diminishment and/or an interruption in a release of the at least one tracer substance (28a-d).

5. Detection device according to one of the preceding claims, **characterised in that** the at least one detection unit (12a-c) comprises at least one data interface (18a-c), which is configured for a transmission of a detected fault state to a higher-level monitoring system.

6. Method for a detection of a fault state via a detection device (10a-d) according to one of the preceding claims.

## Revendications

1. Dispositif de détection pour la détection d'au moins un état de dysfonction, avec au moins une unité traceur (20a-d) comportant, en au moins un état d'opération, au moins une substance traceur (26a-d) spécialement ajoutée, et avec au moins une unité détecteur (12a-d) pour une détection d'une portion de matière, émise en au moins un état de dysfonction, de l'au moins une substance traceur (26a-d),
l'au moins une unité traceur (20a-d) étant implémentée au moins partiellement intégralement avec au moins une unité d'assemblage (30a-d, 36a),
l'au moins une unité traceur (20a) comprenant, en au moins un état d'opération, au moins une autre substance traceur (28a) spécialement ajoutée,
l'au moins une substance traceur (26a) et l'au moins une autre substance traceur (28a) étant disposée au moins en grande partie à ou sur d'unités d'assemblage (30a, 36a) différentes et/ou d'éléments d'assemblage (32a, 34a, 38a) différents d'au moins une unité d'assemblage (30a, 36a),
la portion de matière émise de l'au moins une autre substance traceur (28a) étant prévue pour la détection d'un autre état de dysfonction par le biais de l'unité détecteur (12a-d), de façon qu'il soit possible de détecter au moins deux états de dysfonction par l'au moins une unité traceur (20a),
l'unité détecteur (12a) comportant une pluralité d'éléments détecteur (14a, 16a), prévus pour une détection des substances traceurs (26a-d, 28a) différentes,
les éléments détecteurs (14a, 16a) comportant des capteurs d'oxyde métallique, qui détectent l'une substance traceur (26a-d) par un procédé, dans lequel une conductance d'un capteur d'oxyde métallique est altérée par l'au moins une substance traceur,
l'unité détecteur (12a) étant prévue pour déterminer l'au moins un état de dysfonction par le biais d'une reconnaissance de formes de signaux de mesure de l'au moins une substance traceur et de l'au moins une autre substance traceur,
l'au moins unité détecteur (12d) comportant au moins une unité de signal (50d) prévue pour indiquer un état de dysfonction détecté,
l'au moins un état de dysfonction étant un changement de température non-permissible d'au moins une unité d'assemblage (30a-c, 36a) et
l'au moins un autre état de dysfonction étant un changement de pression, à savoir une non-atteinte d'un valeur limite prédéfini d'une pression d'air et/ou de gaz.

2. Dispositif de détection selon la revendication 1, **caractérisé en ce que** l'au moins une unité traceur (20a-d) comporte au moins un élément porteur (22a-d, 48a), à et/ou sur lequel l'au moins une substance traceur (26a-d) est disposée,
l'au moins un élément porteur (22b) comportant au moins un matériau adsorbant (24b).

3. Dispositif de détection selon l'une quelconque des revendications précédentes, **caractérisé en ce que** l'au moins une unité traceur (20a, 20d) comporte au moins un revêtement avec l'au moins une substance traceur (26a, 26d).

4. Dispositif de détection selon l'une quelconque des revendications précédentes, **caractérisé en ce que** l'au moins une unité détecteur (12a-d) est prévue à détecter une diminution et/ou interruption d'une émission de l'au moins une substance traceur (28a-d).

5. Dispositif de détection selon l'une quelconque des revendications précédentes, **caractérisé en ce que** l'au moins une unité détecteur (12a-c) comporte au moins une interface de données (18a-c) prévue pour une transmission de l'état de dysfonction détecté à un système de surveillance ayant un niveau supérieur.

6. Procédé pour une détection d'un état de dysfonction avec un dispositif de détection (10a-d) selon l'une quelconque des revendications précédentes.
